# EUROPÄISCHE PATENTSCHRIFT

(11) **EP 4 443 124 B1**
(45) Veröffentlichungstag und Bekanntmachung des Hinweises auf die Patenterteilung: **21.01.2026**
(21) Anmeldenummer: 23166482.2
(22) Anmeldetag: 04.04.2023
(51) Int. Cl.: G01L 1/22, G01L 3/14, G01L 5/1627

(54) **SENSOREINRICHTUNG**
SENSOR DEVICE
DISPOSITIF CAPTEUR

(43) Veröffentlichungstag der Anmeldung: 09.10.2024
(73) Patentinhaber: Dr. Johannes Heidenhain GmbH, 83301 Traunreut (DE)
(72) Erfinder: AUER, Daniel, 83278 Traunstein (DE); ECKART, Matthias, 83454 Anger (DE)

(56) Entgegenhaltungen:
- DE-A1- 102022 206 333
- JP-A- 2004 198 400
- JP-A- 2021 096 105

## Beschreibung

### GEBIET DER TECHNIK

Die Erfindung betrifft eine Sensoreinrichtung zur Bestimmung einer Drehmomentbelastung gemäß dem Anspruch 1.

Derartige Sensoren werden etwa zur Bestimmung der Drehmomentbelastung eines Maschinenteils verwendet.

Konkreter kommen derartige Sensoreinrichtungen beispielsweise als Messgeräte zur Bestimmung der Drehmomentbelastung von Maschinenteilen in Robotergelenken zum Einsatz. In diesem Fall werden die Drehmomentmesswerte in der Regel einer Folgeelektronik über eine entsprechende Schnittstellenanordnung zugeführt.

### STAND DER TECHNIK

Sensoreinrichtungen in Form von Dehnungsmessstreifen, die direkt auf ein Messobjekt geklebt werden, sind bereits aus dem Stand der Technik bekannt. Dort wird die Änderung des elektrischen Widerstandes gemessen, der sich überwiegend rein geometrisch aus einer Längenänderung bei Dehnung ergibt. Um einen messbaren Effekt zu erzielen, handelt es sich bei den Dehnungsmessstreifen meist um mäanderförmige, flexible, dünne Metallleitungen. Dehnungsmessstreifen können zwar vielseitig eingesetzt werden, haben jedoch den entscheidenden Nachteil, dass diese nicht strukturspezifisch ausgebildet sind, wodurch ein Messergebnis mit nur unzureichender Genauigkeit erzielt wird. Außerdem werden Dehnmessstreifen in der Regel von Hand auf das Messobjekt geklebt, wodurch die Hauptspannungsrichtungen des Messobjekts meist nicht optimal getroffen werden. Durch das Aufkleben der Dehnmesstreifen auf das Messobjekt können sich zudem Alterungserscheinungen des Klebemittels negativ auf das Messergebnis auswirken.

In der JP 2020 - 201 046 A wird ein Drehmomentsensor offenbart, der das ausgeübte Drehmoment auf einen Körper erfasst. Der Drehmomentsensor umfasst hierbei ein Substrat mit einer ersten Leiterschicht und einer zweiten Leiterschicht, welche mehrere Widerstandsdrahtmuster aufweisen. Die Widerstandsdrahtmuster der ersten und zweiten Leiterschicht umfassen je ein separates sowie homogenes Kreisringmuster, in dem eine Vielzahl von Widerstandsdrähten in Umfangsrichtung angeordnet und in Reihe geschaltet sind. Diese Lösung hat den nicht unerheblichen Nachteil, dass sich thermische Effekte und parasitäre Kräfte negativ auf das Messergebnis auswirken können.

Gattungsgemäße Sensoreinrichtungen sind auch aus den Offenlegungsschriften JP 2021 - 096 105 A und JP 2004 - 198 400 A bekannt.

### ZUSAMMENFASSUNG DER ERFINDUNG

Der Erfindung liegt die Aufgabe zugrunde, eine vergleichsweise einfache Sensoreinrichtung zu schaffen, durch welche eine Messung eines Drehmoments mit relativ hoher Genauigkeit ermöglicht wird.

Diese Aufgabe wird erfindungsgemäß durch die Merkmale des Anspruchs 1 gelöst.

Die erfindungsgemäße Sensoreinrichtung zur Drehmomentmessung umfasst ein Substrat, eine erste Leiterbahn und eine zweite Leiterbahn. Die erste

Leiterbahn und die zweite Leiterbahn sind auf dem Substrat angeordnet und umfassen jeweils mehrere Bereiche mit Strukturen, welche mäanderförmig ausgebildet sind. Die Strukturen der ersten Leiterbahn und die Strukturen der zweiten Leiterbahn sind jeweils über Verbindungsabschnitte, welche als Leiterbahnabschnitte ausgestaltet sind, kontinuierlich miteinander verbunden. Auf diese Weise wird eine Bestimmung der Drehmomentbelastung des Substrats durch die Sensoreinrichtung durch Bestimmung des Widerstands der ersten und zweiten Leiterbahn ermöglicht. Die Strukturen der ersten Leiterbahn und die Strukturen der zweiten Leiterbahn sind derart angeordnet, dass diese entlang einer Kurve alternierend verlaufen. Die Kurve wird unterbrechungsfrei und wenigstens abschnittsweise entlang einer ersten Kreislinie hingeführt und wenigstens abschnittsweise entlang einer zweiten Kreislinie zu ihrem Ursprung rückgeführt. Die erste Kreislinie und die zweite Kreislinie erstrecken sich jeweils konzentrisch zu einem Mittelpunkt und in einer Umfangsrichtung des Substrats. Die Sensoreinrichtung weist mehrere Kreissektoren über 360 Grad verteilt auf, wobei innerhalb jedes Kreissektors vier benachbarte Strukturen angeordnet sind, bestehend aus zwei Strukturen der ersten Leiterbahn und zwei Strukturen der zweiten Leiterbahn, wobei die vier benachbarten Strukturen gemeinsam eine X-förmige oder rautenförmige Formation ausbilden.

Unter einer Sensoreinrichtung ist hierbei insbesondere eine passive Sensoreinrichtung zu verstehen, welche passive Sensoren beziehungsweise passive Bauteile enthält, deren Parameter durch die Drehmomentbelastung verändert werden. Durch elektronische Bauelemente werden diese Parameter in elektrische Signale, vorzugsweise innerhalb der Sensoreinrichtung, umgeformt. Für den Betrieb der Sensoreinrichtung wird eine von außen zugeführte Hilfsenergie insbesondere in Form elektrischer Energie benötigt. Als Parameter kann hier insbesondere der elektrische Widerstand beziehungsweise die elektrischen Widerstände der ersten und zweiten Leiterbahn dienen. Um den elektrischen Widerstand beziehungsweise eine Widerstandsänderung messen zu können, muss die Sensoranordnung - insbesondere die Strukturen der ersten und zweiten Leiterbahn - von einem elektrischen Strom durchflossen sein, sodass folglich die Sensoreinrichtung in Betrieb von außen mit elektrischer Energie versorgt werden muss. Insbesondere die Strukturen der ersten und zweiten Leiterbahn reagieren auf eine Drehmomentbelastung durch Längen- beziehungsweise Querschnittsänderungen, was Auswirkungen auf den elektrischen Widerstand der ersten und zweiten Leiterbahn hat.

Das zu messende Drehmoment kann insbesondere ein Torsionsmoment sein.

Unter einem Substrat ist hierbei ein Bauteil zu verstehen, welches beispielsweise in Form einer Kreisscheibe oder einem Kreisring bereitgestellt ist und das insbesondere einen metallenen Werkstoff umfasst, etwa Stahl, und das vorzugsweise eine isolierende Schicht an einer Fläche aufweist.

Unter einer Kurve ist eine Kurve im mathematischen Sinne zu verstehen, welche primär entlang einer Umfangsrichtung des Substrats verläuft.

Unter einer Struktur ist wenigstens ein Teilabschnitt der ersten Leiterbahn oder zweiten Leiterbahn zu verstehen, welcher einen mäanderförmigen Verlauf mit mehreren parallel ausgerichteten Schlingen umfasst. Mehrere Strukturen ein und derselben Leiterbahn sind unterbrechungsfrei durch Verbindungsabschnitte miteinander verbunden. Die Strukturen der ersten und zweiten Leiterbahn können heterogen-alternierend angeordnet werden, indem eine Vielzahl von Strukturen in Umfangsrichtung angeordnet und in Reihe geschaltet sind.

Unter einem alternierenden Verlauf ist ein Wechsel zwischen den Strukturen der ersten Leiterbahn und den Strukturen der zweiten Leiterbahn entlang der Kurve zu verstehen, wobei wenigstens eine Struktur der ersten Leiterbahn auf eine Struktur der zweiten Leiterbahn folgt.

Mit Vorteil ist die erfindungsgemäße Sensoreinrichtung derart angeordnet, dass die Kurve unterbrechungsfrei und wenigstens abschnittsweise entlang einer ersten Kreislinie hingeführt und wenigstens abschnittsweise entlang einer zweiten Kreislinie zu ihrem Ursprung rückgeführt wird.

Dabei sind die erste Kreislinie und die zweite Kreislinie konzentrisch angeordnet, wobei zwar beide einen identischen Mittelpunkt, jedoch unterschiedliche Radien besitzen.

Unter einer unterbrechungsfreien Hin- und Rückführung ist ein kontinuierlicher und zusammenhängender Verlauf der ersten Leiterbahn bzw. der zweiten Leiterbahn von deren Ursprung entlang des Substrats und zurück zum Ursprung zu verstehen, wobei der Verlauf ohne Abzweigungen, Kreuzungen oder Unterbrechungen charakterisiert ist.

Der Ursprung der Kurve ist der Ausgangspunkt des Kurvenverlaufs der Kurve. Somit ist der Ursprung der Anfangspunkt oder der Endpunkt der ersten beziehungsweise der zweiten Leiterbahn. Die erste beziehungsweise die zweite Leiterbahn ist dort beispielsweise mit einem elektronischen Bauelement kontaktiert. Zwischen der ersten und zweiten Leiterbahn kann im Ursprung ein Mittelabgriff vorgesehen sein.

In weiterer vorteilhafter Ausgestaltung erstrecken sich die erste Kreislinie und die zweite Kreislinie jeweils konzentrisch zu einem Mittelpunkt und in einer Umfangsrichtung des Substrats.

Eine weitere vorteilhafte Weiterbildung umfasst eine erfindungsgemäße Sensoreinrichtung, wobei das Substrat relativ um eine Achse, welche durch den Mittelpunkt verläuft, in der Umfangsrichtung drehbar und ergänzend oder alternativ verwindbar angeordnet ist.

"Verwindbar" bedeutet, dass ein elastischer Körper - insbesondere das Substrat - durch Drehmomente eine Verformung erfährt und somit einen (reversibel) verwundenen bzw. verdrillten Zustand einnimmt.

Die Achse, welche durch den Mittelpunkt verläuft, verläuft zudem orthogonal zur Sensorvorrichtung, insbesondere zur ersten oder zweiten Kreislinie oder zum Substrat.

Mit Vorteil ist die erfindungsgemäße Sensoreinrichtung derart ausgestaltet, dass die Strukturen der ersten Leiterbahn und die Strukturen der zweiten Leiterbahn zueinander symmetrisch angeordnet sind.

Hierbei ist zum einen eine Symmetrie hinsichtlich benachbarter Strukturen entlang der Kurve, insbesondere in Kurvenabschnitten, welche auf der ersten Kreislinie oder der zweiten Kreislinie angeordnet sind, gemeint. Beispielsweise in Form einer Achsen- bzw. Spiegelsymmetrie. Alternativ oder ergänzend kann zudem eine Punktsymmetrie vorliegen. Hierbei liegen je zwei benachbarte Strukturen im Abschnitt der ersten Kreislinie der Kurve und je zwei benachbarte Strukturen im Abschnitt der zweiten Kreislinie der Kurve punktsymmetrisch zueinander, wobei das Paar im ersten Abschnitt der ersten Kreislinie und das Paar im Abschnitt der zweiten Kreislinie ebenfalls symmetrisch zueinander liegen. Die Punktsymmetrie bezieht sich demnach hier auf einen Punkt, der radial mittig zwischen der ersten Kreislinie und der zweiten Kreislinie liegt.

Mit Vorteil sind die Strukturen der erfindungsgemäßen Sensoreinrichtung derart angeordnet, dass vier benachbarte Strukturen innerhalb eines Kreissektors der Sensoreinrichtung liegen. Die vier benachbarten Strukturen umfassen dabei zwei Strukturen der ersten Leiterbahn und zwei Strukturen der zweiten Leiterbahn, wobei die vier benachbarten Strukturen gemeinsam eine X-förmige oder rautenförmige Formation ausbilden.

Unter einem Kreissektor ist die kleinere Teilfläche einer Kreis- oder Ringscheibe zu verstehen - insbesondere bzgl. des Substrats - welche durch einen Kreisbogen, zwei Kreisradien und unter einem Mittelpunktswinkel definiert wird. Hierbei kann die Sensoreinrichtung mehrere Kreissektoren aufweisen, wobei innerhalb jedes Kreissektors vier Sensorstrukturen angeordnet sind. Sind mehrere Kreissektoren auf dem Substrat ausgebildet, können diese entweder gleich oder beliebig über die 360° der Kreis- oder Ringscheibe verteilt sein.

Unter einer Formation ist eine geometrische Anordnung von vier benachbarten Strukturen zu verstehen. Die vier benachbarten Strukturen liegen hierbei in einem Kreissektor, wobei sich diese vier Strukturen aus je einer Struktur der ersten und zweiten Leiterbahn auf je der ersten und zweiten Kreislinie zusammensetzt. Insbesondere Strukturen der gleichen Leiterbahn können sich dabei diagonal gegenüber liegen.

Hierbei kann die Formation derart ausgebildet sein, dass diese beispielsweise dem 24. Buchstaben X" des modernen lateinischen Alphabets oder einer geometrischen Raute ("<>") ähnelt.

In vorteilhafter Weise ist die zweite Leiterbahn derart angeordnet, dass diese die erste Leiterbahn umschließt.

Hierbei ist mit einer umschließenden Anordnung gemeint, dass die Bahnführung der zweiten Leiterbahn derart gestaltet ist, dass die erste und zweite Leiterbahn in einer Ebene beziehungsweise in einer Lage auf dem Substrat liegen, wobei die erste Leiterbahn immer von wenigstens zwei Seiten von der zweiten Leiterbahn bzw. deren Strukturen und Verbindungsabschnitte eingefasst ist. Gleichzeitig schneiden, kreuzen oder berühren sich die erste und zweite Leiterbahn nicht.

Die Verbindungsabschnitte der ersten Leiterbahn und die Verbindungsabschnitte der zweiten Leiterbahn sind näherungsweise gleich lang und haben näherungsweise den gleichen Widerstand.

Mit Vorteil ist die erfindungsgemäße Sensoreinrichtung so ausgestaltet, dass die erste Leiterbahn und die zweite Leiterbahn durch einen additiven Aufbau auf dem Substrat aufgebracht sind.

Im Zuge der Herstellung eines derartigen additiven Aufbaus werden Schichten großflächig oder strukturiert (z. B. mit einem Lift-off-Verfahren) auf dem Substrat aufgebracht. Dies geschieht etwa durch eine chemische Reaktion oder durch eine Kondensation von gasförmigen Stoffen auf die Oberfläche des Substrats. Alternativ kann der additive Aufbau auch durch Abscheidung aus einer flüssigen Phase erzeugt werden. Insbesondere ist unter dem Begriff "additiver Aufbau" nicht zu verstehen, dass die Leiterbahnen auf dem Substrat aufgeklebt sind.

Mit Vorteil ist die erfindungsgemäße Sensoreinrichtung derart ausgestaltet, dass das Substrat wenigstens ein erstes Mittel zur Einleitung einer Drehmomentbelastung und ergänzend oder alternativ wenigstens ein zweites Mittel zur Ausleitung einer Drehmomentbelastung umfasst.

Die Mittel zur Ein- bzw. Ausleitung einer Drehmomentbelastung können in Form einer mechanisch wirkenden bzw. nutzbaren Ausgestaltung des Substrats realisiert sein, beispielsweise in Form einer oder mehrerer Bohrungen. Alternativ oder ergänzend können die Mittel in Form von gleichmäßig oder ungleichmäßig verteilten Zähnen, Zacken oder Zinken ausgestaltet sein. Diese können beispielsweise an einem Außen- oder einem Innenumfang der Kreis- oder Ringscheibe angebracht sein, wobei diese entweder nach außen oder innen abstehen können (wie bei einem Zahnrad) oder unter einem Winkel auf der Oberfläche der Kreis- oder Ringscheibe angebracht sein.

Mit Vorteil ist die erfindungsgemäße Sensoreinrichtung derart ausgestaltet, dass die Drehmomentbelastung durch Bestimmung des Widerstands der ersten Leiterbahn und ergänzend der zweiten Leiterbahn bestimmbar ist.

In weiterer Ausgestaltung der Erfindung umfassen die erste Leiterbahn und die zweite Leiterbahn je eine identische Anzahl an Strukturen, wobei diese gemäß einer Brückenschaltung verschaltet sind.

Insbesondere kann eine Halbbrücke implementiert werden, die beispielsweise die Änderung der Widerstandsdifferenz über eine Spannungsänderung bestimmt.

Mit Vorteil ist auf dem Substrat zumindest ein elektronisches Bauelement angeordnet, durch welches Signale, die von der ersten Leiterbahn und ergänzend oder alternativ von der zweiten Leiterbahn erzeugbar sind, weiterverarbeitbar sind. Insbesondere kann die Weiterverarbeitung durch elektronische Bauelemente zur Signalverstärkung und/oder -digitalisierung erfolgen.

In weiterer Ausgestaltung sind das Substrat aus Metall - insbesondere Stahl - und die Leiterbahnen aus Metall - insbesondere Aluminium, Kupfer, Konstantan oder einer NiCr-Legierung - hergestellt.

Mit Vorteil sind das Substrat und die Leiterbahnen aus unterschiedlichen Metallen hergestellt. Beispielsweise kann das Substrat aus Stahl und die erste Leiterbahn sowie die zweite Leiterbahn aus Kupfer hergestellt sein.

In vorteilhafter Ausgestaltung der Erfindung weisen die Strukturen jeweils mehrere Abschnitte auf, in denen die entsprechende Leiterbahn gerade oder gekrümmt parallel verläuft.

In weiterer Ausgestaltung der Erfindung ist der Krümmungsradius der Leiterbahnen in den Abschnitten in Abhängigkeit vom Abstand zur Achse unterschiedlich. Insbesondere wird der Krümmungsradius mit zunehmendem Abstand zur Achse größer.

Mit Vorteil schneiden die Strukturen in den Abschnitten die Kreislinien, die unterschiedliche Radien aufweisen können, aber deren Mittelpunkt auf der Achse liegt, jeweils in einem gleich großen Winkel. Insbesondere ist der Winkel zwischen der Tangente auf der entsprechenden Kreislinie und der Tangente der Struktur im Schnittpunkt in den Abschnitten an verschiedenen Stellen stets gleich groß. Die Strukturen verlaufen mit Vorteil in den Abschnitten jeweils gemäß einer logarithmischen Spirale.

In vorteilhafter Ausgestaltung der Erfindung hat der Winkel einen Betrag zwischen 20° und 70°, insbesondere zwischen 30° und 60°, vorteilhafterweise zwischen 40° und 50°.

Die Erfindung wird nachstehend auch hinsichtlich weiterer Merkmale und Vorteile anhand der Beschreibung von Ausführungsbeispielen und unter Bezugnahme auf die beiliegenden, schematischen Zeichnungen näher erläutert. Die entsprechenden Figuren zeigen im Einzelnen:

### KURZE BESCHREIBUNG DER ZEICHNUNGEN

- Fig. 1:: zeigt ein Ausführungsbeispiel in perspektivischer Darstellung einer Sensoreinrichtung, gekoppelt an eine Antriebseinheit;
- Fig. 2:: zeigt eine Draufsicht auf die Sensoreinrichtung;
- Fig. 3:: zeigt eine Detailansicht der Strukturen der Sensoreinrichtung;
- Fig. 4:: zeigt eine Gesamtansicht der Strukturen einer Sensoreinrichtung;
- Fig. 5:: zeigt eine Gesamtansicht der Strukturen und der Formation in einem Kreissektor einer Sensoreinrichtung;
- Fig. 6:: zeigt einen Ausschnitt der Strukturen aus Fig. 5 der Sensoreinrichtung.

### BESCHREIBUNG DER AUSFÜHRUNGSFORMEN

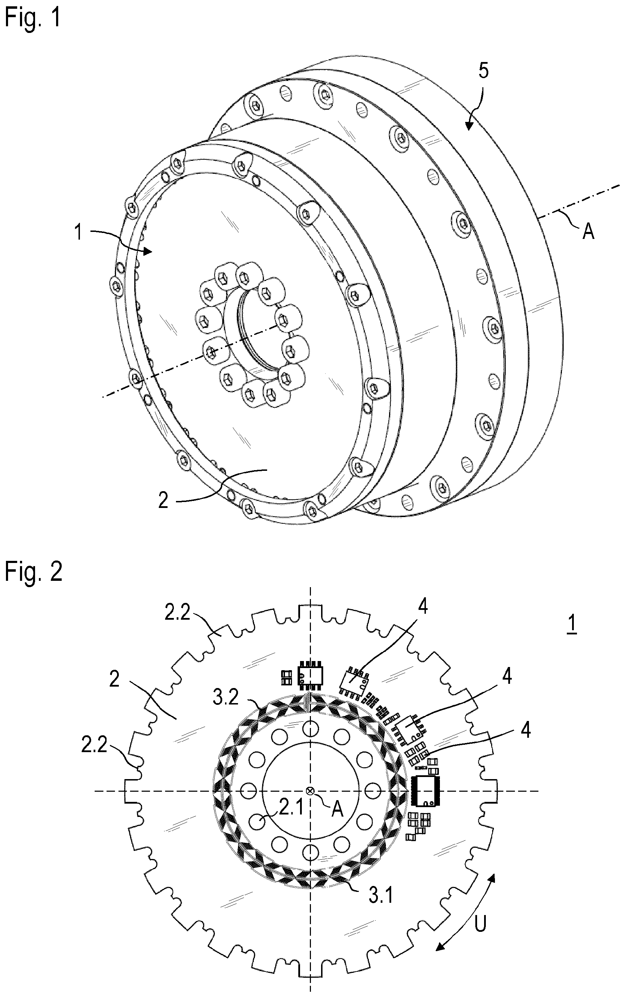

Figur 1 zeigt ein erstes Ausführungsbeispiel in vereinfachter Darstellung der erfindungsgemäßen Sensoreinrichtung 1, gekoppelt an eine Antriebseinheit 5. Eine solche Anordnung findet beispielsweise Anwendung in Roboterachsen von Industrierobotern. Die Sensoreinrichtung 1 steht mit der Antriebseinheit 5 in Verbindung, wobei das Substrat der Sensoreinrichtung 1 an die Antriebseinheit 5 gekoppelt oder angeflanscht ist. Als Reaktion auf eine tangentiale Krafteinleitung in die Sensoreinrichtung 1 durch die Antriebseinheit 5 kann insbesondere auf das Substrat 2 ein Drehmoment wirken, wodurch es zum geringfügigen Verwinden der Sensoreinrichtung 1 beziehungsweise des Substrats 2 kommt. Das hierbei auftretende Drehmoment kann von der Sensoreinrichtung 1 erfasst und weiterverarbeitet werden.

In der Figur 2 ist eine Draufsicht auf die Sensoreinrichtung 1 gezeigt. Die Sensoreinrichtung 1 umfasst das Substrat 2, welches beispielsweise aus einem (insbesondere faserverstärktem) Epoxid-Harz, aus kohlenstofffaserverstärktem Kunststoff oder aus einem Metall, insbesondere Stahl, besteht. Für Befestigungszwecke weist die Sensoreinrichtung 1 beziehungsweise das Substrat 2 Bohrungen 2.1 und Zähne 2.2 auf, wobei die Bohrungen 2.1 entlang eines inneren Durchmessers und die Zähne 2.2 entlang eines äußeren Durchmessers konzentrisch zur Achse A angeordnet sind. Auf diese Weise kann die Sensoreinrichtung 1 unter Zuhilfenahme von Schrauben oder Nieten verdrehsicher an einem Bauteil, beispielsweise einem Flansch und einer Nabe einer Antriebseinheit 5, angebracht werden. Die Sensoreinrichtung 1 umfasst zudem eine erste und zweite Leiterbahn 3.1, 3.2, welche durch einen additiven Aufbau, insbesondere mit Hilfe eines Fotolithografie-Prozesses, aufgebracht sind. Falls das Substrat 2 aus einem Metall-Werkstoff, etwa Stahl, hergestellt ist, wird zwischen den Leiterbahnen 3.1, 3.2 und dem Substrat 2 eine elektrisch isolierende Kunststoffschicht, beispielsweise aus Polyimid, bereitgestellt.

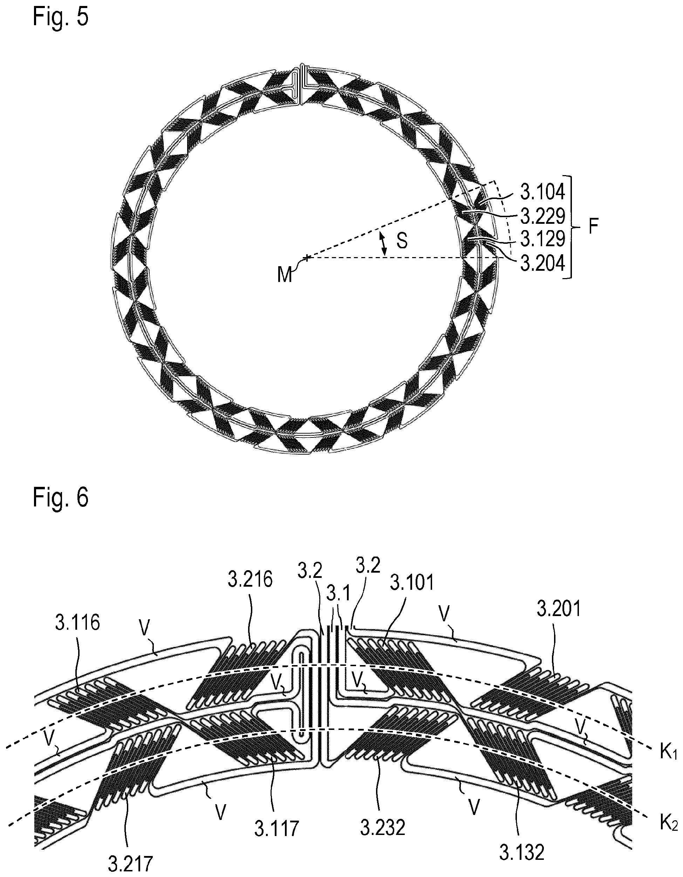

Die Sensoreinrichtung 1 ist im Wesentlichen ring- bzw. kreisförmig ausgebildet und bezüglich der Achse A zentrisch angeordnet. Außerdem sind die Leiterbahnen 3.1, 3.2 in einer Ebene angeordnet, die orthogonal zur Achse A orientiert ist. Insbesondere ist die Sensoreinrichtung 1 bezüglich eines Punktes auf der Achse A punktsymmetrisch ausgestaltet. Die Strukturen 3.101-3.132, 3.201-3.232 (siehe Figur 6) der ersten und zweiten Leiterbahn 3.1, 3.2 bestehen beispielsweise aus Kupfer oder Konstantan.

Die Sensoreinrichtung 1 kann mit elektrischer Energie versorgt werden. Dies kann beispielsweise über ein Kabel (bei Begrenzung der möglichen Anzahl an Umdrehungen), über einen Schleifring oder drahtlos erfolgen. Beim Betreiben der Sensoreinrichtung 1 fließt ein definierter Strom durch die Sensoreinrichtung 1. Dadurch, dass das Drehmoment durch die Sensoreinrichtung 1 bzw. das Substrat 2 hindurch geleitet wird, kommt es zur Verformung der Sensoreinrichtung 1. In Abhängigkeit von der Verformung des Substrats 2 aufgrund einer Drehmomentbelastung (insbesondere einer Torsionsbelastung) kommt es in Folge von lokalen Dehnungserscheinungen insbesondere in den Strukturen 3.101-3.132, 3.201-3.232 zu einer Längenänderung der Leiterbahnen 3.1, 3.2. Dies hat wiederum eine Änderung des Widerstands zur Folge. Durch Nutzung dieses Effekts kann durch die Sensoreinrichtung 1 eine Drehmomentbelastung (insbesondere eine Torsionsbelastung) des Substrats 2 um die Achse A bestimmt werden. Durch die elektronischen Bauelemente 4 werden Signale erzeugt, verarbeitet und bei Bedarf zu einer Folgeelektronik übertragen.

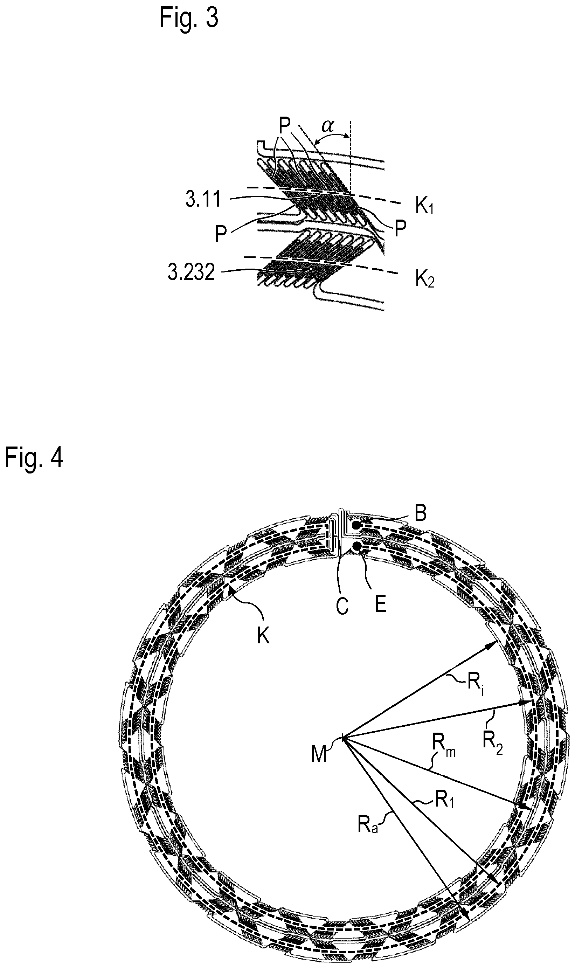

Die Strukturen 3.101-3.132, 3.201-3.232 der Leiterbahnen 3.1, 3.2 weisen gemäß der Detailansicht in Figur 3 jeweils mehrere Abschnitte P auf, in denen die Leiterbahnen 3.1, 3.2 gerade verlaufen. Die Leiterbahnen 3.1, 3.2 schneiden in den Abschnitten P eine der Kreislinien K₁, K₂ so, dass immer der Mittelpunkt jedes Abschnitts P beziehungsweise die jeweilige Abschnittshalbierende jedes Abschnitts P auf der ersten Kreislinie K₁ beziehungsweise auf der zweiten Kreislinie K₂ liegt. Im vorgestellten Ausführungsbeispiel schließt der Verlauf des jeweiligen geraden Abschnitts P und eine in radialer Richtung verlaufende Gerade durch den Mittelpunkt des Abschnitts P einen Winkel *α* mit einem Betrag von 45° ein.

Alternativ können die Leiterbahnen 3.1, 3.2 auch gekrümmt und parallel verlaufen (in den Figuren nicht dargestellt). In diesem Fall der alternativen Ausführungsform verlaufen die Leiterbahnen 3.1, 3.2 dann in den Bereichen der Abschnitte P entlang paralleler Spirallinien, so dass innerhalb der Abschnitte P der Krümmungsradius der Leiterbahnen 3.1, 3.2 in Abhängigkeit vom Abstand zur Achse A unterschiedlich ist. Der Winkel *α* kann gemäß des alternativen Ausführungsbeispiels ebenfalls betragsmäßig 45° betragen. Folglich verlaufen die Leiterbahnen 3.1, 3.2 dann in den Abschnitten P jeweils gemäß den Gesetzmäßigkeiten zweier logarithmischen Spiralen. Jede Tangente an einer der Kreislinien K₁, K₂ schneidet eine der logarithmischen Spiralen stets unter dem gleichen Winkel *α* (isogonale Trajektorien), wobei diese Eigenschaft für beliebige Kreislinien mit unterschiedlichen Radien, deren gemeinsamer Mittelpunkt M auf der Achse A liegt, zutrifft. Die Leiterbahnen 3.1, 3.2 verlaufen in diesem Fall in den Abschnitten P daher auch gemäß gleichwinkliger Spiralen.

Die Leiterbahnen 3.1, 3.2 umfassen mehrere Strukturen 3.101-3.132, 3.201-3.232, welche alternierend entlang einer Kurve K angeordnet sind. Die Kurve K besitzt gemäß der Figur 4 ihren Ursprung in einem ersten Punkt B auf der ersten Kreislinie K₁ und verläuft zunächst entlang der ersten Kreislinie K₁ und geht in einem Übergangsbereich C unterbrechungsfrei auf die zweite Kreislinie K₂ über. Die Kurve K verläuft anschließend weiter entlang der Kreislinie K₂ und endet in einem zweiten Punkt E. Beginnend im ersten Punkt B folgt auf eine Struktur 3.11 der ersten Leiterbahn 3.1 eine Struktur 3.21 der zweiten Leiterbahn 3.2 und so weiter entlang der Kurve K, bis der zweite Punkt E erreicht ist. Im Übergangsbereich C treten keine Strukturen 3.101-3.132, 3.201-3.232 auf. Die erste Kreislinie K₁ hat ihren Mittelpunkt M auf der Achse A und besitzt den Radius R₁. Die zweite Kreislinie K₂ hat ihren Mittelpunkt M ebenfalls auf der Achse A und besitzt den Radius R₂. Beide Kreislinien K₁, K₂ sind konzentrisch um den Mittelpunkt M angeordnet und es gilt: R₂ < R₁.

Wie den Figuren 5 und 6 entnommen werden kann, sind die Strukturen 3.101-3.132, 3.201-3.232 der ersten und zweiten Leiterbahn 3.1, 3.2 derart angeordnet, dass vier benachbarte Strukturen innerhalb eines Kreissektors S liegen. Die vier gezeigten benachbarten Strukturen 3.104, 3.129; 3.204, 3.229 umfassen dabei die zwei Strukturen 3.104, 3.129 der ersten Leiterbahn 3.1 und die zwei Strukturen 3.204, 3.229 der zweiten Leiterbahn 3.2, wobei die vier benachbarten Strukturen 3.104, 3.129; 3.204, 3.229 gemeinsam eine X-förmige Formation F ausbilden. Dabei sind die Strukturen 3.104, 3.129 bzw. 3.204, 3.229 einer gleichen Leiterbahn 3.1; 3.2 innerhalb einer Formation F diagonal gegenüber liegend angeordnet. Die in Figur 5 dargestellte Formation F kommt insgesamt 16-mal über 360° verteilt vor und erstreckt sich konzentrisch und näherungsweise gleichverteilt entlang einer Kreislinie mit dem Mittelpunkt M.

Figur 6 zeigt eine Detailansicht des Ausführungsbeispiels aus Figur 5. Die Anordnung der Strukturen 3.101-3.132, 3.201-3.232 der ersten und zweiten Leiterbahn 3.1, 3.2 erfolgt hier X-förmig. Die Strukturen 3.101-3.132, 3.201-3.232 der ersten und zweiten Leiterbahn 3.1, 3.2 sind symmetrisch angeordnet, wobei eine Spiegel- bzw. Achsensymmetrie hinsichtlich benachbarter Strukturen 3.101-3.132, 3.201-3.232 entlang der ersten Kreislinie K₁ sowie der zweiten Kreislinie K₂ besteht. Darüber hinaus alternieren die Strukturen 3.101-3.132 der ersten Leiterbahn 3.1 und die Strukturen 3.201-3.232 der zweiten Leiterbahn 3.2 entlang der ersten Kreislinie K₁ bzw. der zweiten Kreislinie K₂ hinsichtlich ihrer Zugehörigkeit zur ersten und zweiten Leiterbahn 3.1, 3.2 und dem Winkel *α*. So besitzen beispielsweise die Strukturen 3.101-3.132 der ersten Leiterbahn 3.1 entlang der ersten Kreislinie K₁ den Winkel *α*₁ = 45° und die Strukturen 3.201-3.232 der zweiten Leiterbahn 3.2 entlang der ersten Kreislinie K₁ den Winkel *α₂* = -45°. Die einzelnen Strukturen 3.101-3.132, 3.201-3.232 einer Leiterbahn 3.1, 3.2 beginnen und enden in einem Verbindungsabschnitt V, wobei dieser hinsichtlich Länge und Form unterschiedlich ausgestaltet sein kann. Insbesondere verlaufen die erste Leiterbahn 3.1 und die zweite Leiterbahn 3.2 in den Verbindungsabschnitten V in Umfangsrichtung. Die Bahnführung der zweiten Leiterbahn 3.2 ist so ausgestaltet, dass diese die erste Leiterbahn 3.1 über den gesamten Umfang des Substrats 2 umschließt, d. h. die Verbindungsabschnitte V der zweiten Leiterbahn 3.2 sind auf dem Substrat 2 außen liegend, d. h. entlang einer Kreislinie mit dem Außenradius Rₐ und einer Kreislinie mit dem Innenradius Rᵢ angeordnet, wohingegen die Verbindungsabschnitte V der ersten Leiterbahn 3.1 innen liegend angeordnet sind, d. h entlang einer Kreislinie mit dem Mittelradius Rₘ. Der Verlauf der ersten und zweiten Leiterbahn 3.1, 3.2 erfolgt stets unterbrechungsfrei, sowohl bei der Hinführung als auch bei der Rückführung.

Die Verbindungsabschnitte V und Strukturen 3.101-3.132 der ersten Leiterbahn 3.1 und die Verbindungsabschnitte V und Strukturen 3.201-3.232 der zweiten Leiterbahn 3.2 sind in Summe näherungsweise gleich lang und haben näherungsweise den gleichen Widerstand. Dabei verlaufen die Verbindungsabschnitte V der zweiten Leiterbahn 3.2 auf dem Substrat 2 bei der Hinführung außen liegend, d. h. entlang einer Kreislinie mit dem Außenradius Rₐ und bei der Rückführung entlang einer Kreislinie mit dem Innenradius Rᵢ. Die Verbindungsabschnitte V der ersten Leiterbahn 3.1 verlaufen auf dem Substrat 2 sowohl bei der Hinführung als auch bei der Rückführung zwischen den Strukturen 3.101-3.132, 3.201-3.232 der ersten und zweiten Leiterbahn 3.2, 3.1 innen liegend, d. h. entlang einer Kreislinie mit dem Mittelradius Rₘ. Es gilt: Rᵢ + Rₐ = 2 · Rₘ. Hierdurch ist ein gleichmäßiger Temperatureintrag auf die erste und zweite Leiterbahn 3.1, 3.2 bei einem einlagigen Aufbau gewährleistet, da sich sowohl die Strukturen 3.101-3.132, 3.201-3.232 der ersten und zweiten Leiterbahn 3.1, 3.2 als auch die Verbindungsabschnitte V im Mittel auf einer virtuellen Kreislinie mit identischem Radius befinden. Dadurch besitzen die erste und zweite Leiterbahn 3.1, 3.2 selbst bei Temperaturgradienten von innen nach außen auf dem Substrat 2 im Mittel die gleiche Temperatur. Durch die über den Umfang U des Substrats 2 verteilte, vielfache Anordnung der Strukturen 3.101-3.132, 3.201-3.232 können zudem parasitäre Einflüsse durch Nutzung von Symmetrieeffekten besser kompensiert werden.

### Bezugszeichenübersicht

- 1: Sensoreinrichtung
- 2: Substrat
- 2.1: Erstes Mittel
- 2.2: Zweites Mittel
- 3.1: Erste Leiterbahn
- 3.101-3.132: Strukturen der ersten Leiterbahn
- 3.2: Zweite Leiterbahn
- 3.201-3.232: Strukturen der zweiten Leiterbahn
- 4: Elektronisches Bauelement
- 5: Antriebseinheit
- A: Achse
- U: Umfangsrichtung
- K: Kurve
- K₁: Erste Kreislinie
- K₂: Zweite Kreislinie
- M: Mittelpunkt
- R₁: Erster Radius
- R₂: Zweiter Radius
- Rₐ: Außenradius
- Rᵢ: Innenradius
- Rₘ: Mittelradius
- B: Erster Punkt
- E: Zweiter Punkt
- C: Übergangsbereich
- V: Verbindungsabschnitt
- S: Kreissektor
- F: Formation
- P: Abschnitt
- *α*: Winkel *α*

## Patentansprüche

1. Sensoreinrichtung (1) zur Drehmomentmessung umfassend ein Substrat (2), eine erste Leiterbahn (3.1) und eine zweite Leiterbahn (3.2),
wobei die erste Leiterbahn (3.1) und die zweite Leiterbahn (3.2) auf dem Substrat (2) angeordnet sind und jeweils mehrere Bereiche mit Strukturen (3.101-3.132; 3.201-3.232) umfassen, welche mäanderförmig ausgebildet sind,
wobei die Strukturen (3.101-3.132) der ersten Leiterbahn (3.1) und die Strukturen (3.201-3.232) der zweiten Leiterbahn (3.2) jeweils über Verbindungsabschnitte (V) miteinander verbunden sind, sodass durch die Sensoreinrichtung (1) eine Drehmomentbelastung des Substrats (2) durch Bestimmung des Widerstands der ersten und zweiten Leiterbahn (3.1, 3.2) bestimmbar ist,
wobei die Strukturen (3.101-3.132) der ersten Leiterbahn (3.1) und die Strukturen (3.201-3.232) der zweiten Leiterbahn (3.2) derart angeordnet sind, dass diese entlang einer Kurve (K) alternierend verlaufen,
wobei:
• die Kurve (K) unterbrechungsfrei und wenigstens abschnittsweise entlang einer ersten Kreislinie (K₁) hingeführt und wenigstens abschnittsweise entlang einer zweiten Kreislinie (K₂) zu ihrem Ursprung rückgeführt wird, wobei sich die erste Kreislinie (K₁) und die zweite Kreislinie (K₂) jeweils konzentrisch zu einem Mittelpunkt (M) und in einer Umfangsrichtung (U) des Substrats (2) erstrecken,
• die Sensoreinrichtung (1) mehrere Kreissektoren (S) über 360 Grad verteilt aufweist,
• innerhalb jedes Kreissektors (S) vier benachbarte Strukturen (3.101-3.132; 3.201-3.232) angeordnet sind, bestehend aus zwei Strukturen (3.101-3.132) der ersten Leiterbahn (3.1) und zwei Strukturen (3.201-3.232) der zweiten Leiterbahn (3.2), wobei die vier benachbarten Strukturen (3.101-3.132; 3.201-3.232) gemeinsam eine X-förmige oder rautenförmige Formation (F) ausbilden.

2. Sensoreinrichtung (1) gemäß Anspruch 1, wobei das Substrat (2) relativ um eine Achse (A), welche durch den Mittelpunkt (M) verläuft, und in die Umfangsrichtung (U) drehbar und/oder verwindbar angeordnet ist.

3. Sensoreinrichtung (1) einem der vorhergehenden Ansprüche, wobei die Strukturen (3.101-3.132; 3.201-3.232) der ersten Leiterbahn (3.1) und der zweiten Leiterbahn (3.2) zueinander symmetrisch angeordnet sind.

4. Sensoreinrichtung (1) gemäß einem der vorhergehenden Ansprüche, wobei die zweite Leiterbahn (3.2) derart angeordnet ist, dass diese die erste Leiterbahn (3.1) umschließt.

5. Sensoreinrichtung (1) gemäß einem der vorhergehenden Ansprüche, wobei die erste Leiterbahn (3.1) und zweite Leiterbahn (3.2) durch einen additiven Aufbau auf dem Substrat (2) aufgebracht sind.

6. Sensoreinrichtung (1) gemäß einem der vorhergehenden Ansprüche, wobei das Substrat (2) wenigstens ein erstes Mittel (2.1) zur Einleitung einer Drehmomentbelastung und wenigstens ein zweites Mittel (2.2) zur Ausleitung einer Drehmomentbelastung umfasst.

7. Sensoreinrichtung (1) gemäß einem der vorhergehenden Ansprüche, wobei die erste Leiterbahn (3.1) und zweite Leiterbahn (3.2) je eine identische Anzahl an Strukturen (3.101-3.132; 3.201-3.232) umfassen, wobei diese gemäß einer Brückenschaltung verschaltet sind.

8. Sensoreinrichtung (1) gemäß einem der vorhergehenden Ansprüche, wobei auf dem Substrat (2) zumindest ein elektronisches Bauelement (4) angeordnet ist, durch welches Signale, die von der ersten und/oder der zweiten Leiterbahn (3.1; 3.2) erzeugbar sind, weiterverarbeitbar sind.

9. Sensoreinrichtung (1) gemäß einem der vorhergehenden Ansprüche, wobei das Substrat (2) und die Leiterbahnen (3.1; 3.2) aus Metall hergestellt sind.

10. Sensoreinrichtung (1) gemäß Anspruch 9, wobei das Substrat (2) und die Leiterbahnen (3.1; 3.2) aus unterschiedlichen Metallen hergestellt sind.

11. Sensoreinrichtung (1) gemäß einem der vorhergehenden Ansprüche, wobei die Strukturen (3.101-3.132; 3.201-3.232) jeweils mehrere Abschnitte (P) aufweisen, in denen die Leiterbahnen (3.1; 3.2) gerade oder gekrümmt parallel verlaufen.

12. Sensoreinrichtung (1) gemäß einem der vorhergehenden Ansprüche, wobei die Strukturen (3.101-3.132; 3.201-3.232) jeweils mehrere Abschnitte (P) aufweisen, in denen die Leiterbahnen (3.1; 3.2) gekrümmt mit einem Krümmungsradius parallel verlaufen, wobei der Krümmungsradius in Abhängigkeit vom Abstand zur Achse (A) unterschiedlich ist.

13. Sensoreinrichtung (1) gemäß einem der Ansprüche 11 oder 12, wobei die Strukturen (3.101-3.132; 3.201-3.232) in den Abschnitten (P) eine der Kreislinien (K₁; K₂) in einem betragsmäßig identischen Winkel (*α*) schneidet.

14. Sensoreinrichtung (1) gemäß dem Anspruch 13, wobei der Winkel (*α*) einen Betrag zwischen 20° und 70° annimmt.

15. Sensoreinrichtung (1) gemäß einem der vorhergehenden Ansprüche, wobei die Verbindungsabschnitte (V) der zweiten Leiterbahn (3.2) bei der Hinführung entlang einer Kreislinie mit einem Außenradius (Rₐ) und bei der Rückführung entlang einer Kreislinie mit einem Innenradius (Rᵢ) verlaufen und wobei die Verbindungsabschnitte (V) der ersten Leiterbahn (3.1) sowohl bei der Hinführung als auch bei der Rückführung entlang einer Kreislinie mit dem Mittelradius (Rₘ) verlaufen, wobei gilt: Rᵢ + Rₐ = 2 · Rₘ.

## Claims

1. Sensor device (1) for torque measurement, comprising a substrate (2), a first conductor track (3.1) and a second conductor track (3.2),
wherein the first conductor track (3.1) and the second conductor track (3.2) are arranged on the substrate (2) and each comprise a plurality of regions with structures (3.101-3.132; 3.201-3.232) which are of meandering form, wherein the structures (3.101-3.132) of the first conductor track (3.1) and the structures (3.201-3.232) of the second conductor track (3.2) are connected to each other via connecting portions (V) in each case, so that a torque load of the substrate (2) can be determined by the sensor device (1) by determining the resistance of the first and the second conductor track (3.1, 3.2), wherein the structures (3.101-3.132) of the first conductor track (3.1) and the structures (3.201-3.232) of the second conductor track (3.2) are arranged in such a way that they run alternately along a curve (K), wherein:
• the curve (K) is guided forward without interruption and at least in portions along a first circular line (K₁) and is returned to its origin at least in portions along a second circular line (K₂), wherein the first circular line (K₁) and the second circular line (K₂) each extend concentrically to a centre point (M) and in a circumferential direction (U) of the substrate (2),
• the sensor device (1) has a plurality of sectors (S) of a circle distributed over 360 degrees,
• four adjacent structures (3.101-3.132; 3.201-3.232) are arranged within each sector (S) of a circle, the structures consisting of two structures (3.101-3.132) of the first conductor track (3.1) and two structures (3.201-3.232) of the second conductor track (3.2), wherein the four adjacent structures (3.101-3.132; 3.201-3.232) together form an X-shaped or rhombus-shaped formation (F).

2. Sensor device (1) according to Claim 1, wherein the substrate (2) is arranged such that it can be rotated and/or twisted relative to and about an axis (A), which runs through the centre point (M), and in the circumferential direction (U).

3. Sensor device (1) according to either of the preceding claims, wherein the structures (3.101-3.132; 3.201-3.232) of the first conductor track (3.1) and the second conductor track (3.2) are arranged symmetrically in relation to each other.

4. Sensor device (1) according to any of the preceding claims, wherein the second conductor track (3.2) is arranged in such a way that it encloses the first conductor track (3.1).

5. Sensor device (1) according to any of the preceding claims, wherein the first conductor track (3.1) and second conductor track (3.2) are applied by additive construction on the substrate (2).

6. Sensor device (1) according to any of the preceding claims, wherein the substrate (2) comprises at least one first means (2.1) for introducing a torque load and at least one second means (2.2) for discharging a torque load.

7. Sensor device (1) according to any of the preceding claims, wherein the first conductor track (3.1) and the second conductor track (3.2) each comprise an identical number of structures (3.101-3.132; 3.201-3.232), wherein these are interconnected in accordance with a bridge circuit.

8. Sensor device (1) according to any of the preceding claims, wherein at least one electronic component (4) is arranged on the substrate (2), it being possible for signals, which can be generated by the first and/or the second conductor track (3.1; 3.2), to be further processed by the electronic component.

9. Sensor device (1) according to any of the preceding claims, wherein the substrate (2) and the conductor tracks (3.1; 3.2) are made of metal.

10. Sensor device (1) according to Claim 9, wherein the substrate (2) and the conductor tracks (3.1; 3.2) are made of different metals.

11. Sensor device (1) according to any of the preceding claims, wherein the structures (3.101-3.132; 3.201-3.232) each have several portions (P) in which the conductor tracks (3.1; 3.2) run straight or curved in parallel.

12. Sensor device (1) according to any of the preceding claims, wherein the structures (3.101-3.132; 3.201-3.232) each have several portions (P), in which the conductor tracks (3.1; 3.2) run curved with a radius of curvature in parallel, wherein the radius of curvature is different depending on the distance from the axis (A).

13. Sensor device (1) according to either of Claims 11 and 12, wherein the structures (3.101-3.132; 3.201-3.232) intersect one of the circular lines (K₁; K₂) at an angle (α) of identical magnitude in the portions (P).

14. Sensor device (1) according to Claim 13, wherein the angle (a) assumes a magnitude of between 20° and 70°.

15. Sensor device (1) according to any of the preceding claims, wherein the connecting portions (V) of the second conductor track (3.2) run along a circular line with an outer radius (Rₐ) during the forward guidance and along a circular line with an inner radius (Rᵢ) during the return guidance and wherein the connecting portions (V) of the first conductor track (3.1) run along a circular line with the centre radius (Rₘ) both during the forward guidance and during the return guidance, where: Rᵢ + Rₐ = 2 · Rₘ.

## Revendications

1. Dispositif capteur (1) pour la mesure de couple, comprenant un substrat (2), une première piste conductrice (3.1) et une seconde piste conductrice (3.2), la première piste conductrice (3.1) et la seconde piste conductrice (3.2) étant agencées sur le substrat (2) et comprenant chacune une pluralité de régions ayant des structures (3.101-3.132 ; 3.201-3.232) en forme de méandres,
les structures (3.101-3.132) de la première piste conductrice (3.1) et les structures (3.201-3.232) de la seconde piste conductrice (3.2) étant reliées entre elles par des sections de connexion (V), de sorte que le dispositif capteur (1) peut déterminer une charge de couple sur le substrat (2) par détermination de la résistance des première et seconde pistes conductrices (3.1, 3.2),
les structures (3.101-3.132) de la première piste conductrice (3.1) et les structures (3.201-3.232) de la seconde piste conductrice (3.2) étant agencées de manière à s'étendre en alternance le long d'une courbe (K), dans lequel :
• la courbe (K) s'étend sans interruption et au moins par sections le long d'une première ligne circulaire (K₁) et revient vers son origine au moins par sections le long d'une seconde ligne circulaire (K₂), la première ligne circulaire (K₁) et la seconde ligne circulaire (K₂) s'étendant chacune concentriquement par rapport à un point central(M) et dans une direction circonférentielle (U) du substrat (2),
• le dispositif capteur (1) présente une pluralité de secteurs circulaires (S) répartis sur 360 degrés,
• quatre structures adjacentes (3.101-3.132 ; 3.201-3.232) sont agencées dans chaque secteur circulaire (S), et sont constituées de deux structures (3.101-3.132) de la première piste conductrice (3.1) et de deux structures (3.201-3.232) de la seconde piste conductrice (3.2), les quatre structures adjacentes (3.101-3.132 ; 3.201-3.232) constituant ensemble une formation (F) en X ou en losange.

2. Dispositif capteur (1) selon la revendication 1, dans lequel le substrat (2) est agencé en rotation et/ou en torsion dans la direction circonférentielle (U) par rapport à un axe (A) qui passe par le point central (M).

3. Dispositif capteur (1) selon l'une quelconque des revendications précédentes, dans lequel les structures (3.101-3.132 ; 3.201-3.232) de la première piste conductrice (3.1) et de la seconde piste conductrice (3.2) sont agencées symétriquement l'une par rapport à l'autre.

4. Dispositif capteur (1) selon l'une quelconque des revendications précédentes, dans lequel la seconde piste conductrice (3.2) est agencée de telle sorte qu'elle entoure la première piste conductrice (3.1).

5. Dispositif capteur (1) selon l'une quelconque des revendications précédentes, dans lequel la première piste conductrice (3.1) et la seconde piste conductrice (3.2) sont appliquées sur le substrat (2) par fabrication additive.

6. Dispositif capteur (1) selon l'une quelconque des revendications précédentes, dans lequel le substrat (2) comprend au moins un premier moyen (2.1) pour introduire une charge de couple et au moins un second moyen (2.2) pour décharger une charge de couple.

7. Dispositif capteur (1) selon l'une quelconque des revendications précédentes, dans lequel la première piste conductrice (3.1) et la seconde piste conductrice (3.2) comprennent chacune un nombre identique de structures (3.101-3.132 ; 3.201-3.232), lesdites structures étant reliées selon un circuit en pont.

8. Dispositif capteur (1) selon l'une quelconque des revendications précédentes, dans lequel au moins un composant électronique (4) est agencé sur le substrat (2), au moyen duquel des signaux, qui peuvent être générés par la première et/ou la seconde piste conductrice (3.1 ; 3.2) peuvent être soumis à un post-traitement.

9. Dispositif capteur (1) selon l'une quelconque des revendications précédentes, dans lequel le substrat (2) et les pistes conductrices (3.1 ; 3.2) sont fabriqués à partir de métal.

10. Dispositif capteur (1) selon la revendication 9, dans lequel le substrat (2) et les pistes conductrices (3.1 ; 3.2) sont fabriqués à partir de métaux différents.

11. Dispositif capteur (1) selon l'une quelconque des revendications précédentes, dans lequel les structures (3.101-3.132 ; 3.201-3.232) présentent chacune plusieurs sections (P) dans lesquelles les pistes conductrices (3.1; 3.2) s'étendent parallèlement de manière rectiligne ou incurvée.

12. Dispositif capteur (1) selon l'une quelconque des revendications précédentes, dans lequel les structures (3.101-3.132 ; 3.201-3.232) présentent chacune plusieurs sections (P) dans lesquelles les pistes conductrices (3.1 ; 3.2) s'étendent de manière incurvée avec un rayon de courbure parallèle, le rayon de courbure variant en fonction de la distance par rapport à l'axe (A).

13. Dispositif capteur (1) selon l'une quelconque des revendications 11 et 12, dans lequel les structures (3.101-3.132 ; 3.201-3.232) présentes dans les sections (P) coupent l'une des lignes circulaires (K₁ ; K₂) selon des angles (α) identiques en valeur absolue.

14. Dispositif capteur (1) selon la revendication 13, dans lequel l'angle (α) a une valeur comprise entre 20° et 70°.

15. Dispositif capteur (1) selon l'une quelconque des revendications précédentes, dans lequel les sections de connexion (V) de la seconde piste conductrice (3.2) s'étendent en partant le long d'une ligne circulaire avec un rayon extérieur (Rₐ) et en revenant le long d'une ligne circulaire avec un rayon intérieur (Rᵢ), et dans lequel les sections de connexion (V) de la première piste conductrice (3.1) s'étendent le long d'une ligne circulaire avec le rayon central (Rₘ) à la fois dans le sens aller et dans le sens retour, dans lequel on a : Rᵢ + Rₐ = 2 · Rₘ.
